# EUROPÄISCHE PATENTSCHRIFT

(11) **EP 2 547 754 B1**
(45) Veröffentlichungstag und Bekanntmachung des Hinweises auf die Patenterteilung: **26.07.2017**
(21) Anmeldenummer: 10796264.9
(22) Anmeldetag: 06.11.2010
(51) Int. Cl.: C11C 1/08, C11C 1/10, C11C 3/00, C11C 3/04, C10L 1/02

(54) **VERFAHREN ZUR AUFARBEITUNG VON BIODIESELSCHLAMM**
METHOD FOR REPROCESSING BIODIESEL SLUDGE
PROCÉDÉ DE RETRAITEMENT DE BOUE DE BIODIESEL

(30) Priorität: 16.03.2010 DE 102010011606
(43) Veröffentlichungstag der Anmeldung: 23.01.2013
(73) Patentinhaber: Air Liquide Global E&C Solutions Germany GmbH, 60439 Frankfurt am Main (DE)
(72) Erfinder: SEIDEL, Eckhard, 60385 Frankfurt am Main (DE); BÖNSCH, Rudolf, 55299 Nackenheim (DE); RAAB-BRILL, Ute, 61118 Bad Vilbel (DE)
(86) Internationale Anmeldenummer: PCT/DE2010/001302
(87) Internationale Veröffentlichungsnummer: WO 2011/113401

(56) Entgegenhaltungen:
- EP-A1- 2 071 014
- WO-A1-2009/132670
- WO-A1-2010/107446
- US-A1- 2006 121 174
- DUNN ET AL: "Effects of minor constituents on cold flow properties and performance of biodiesel", PROGRESS IN ENERGY AND COMBUSTION SCIENCE, ELSEVIER SCIENCE PUBLISHERS, AMSTERDAM, NL, Bd. 35, Nr. 6, 1. Dezember 2009 (2009-12-01), Seiten 481-489, XP026733243, ISSN: 0360-1285, DOI: DOI:10.1016/J.PECS.2009.07.002 [gefunden am 2009-08-19]

## Beschreibung

Die Erfindung betrifft ein Verfahren zur Aufarbeitung einer im Wesentlichen aus Sterylglycosid/Fettsäurealkylester/Wasser-Agglomeraten bestehenden Phase, sogenanntem Biodieselschlamm, der bei der Wäsche mit Wasser von durch Umesterung von pflanzlichen Ölen oder tierischen Fetten erzeugtem Fettsäurealkylester entstanden ist.

Aus, zum Beispiel dem Fachartikel "The Role of Sterol Glucosides on Filter Plugging", Inmok Lee u.a., Biodiesel Magzine, April 2007, ist bekannt, dass bei der Umesterung von natürlichen Fetten oder Ölen mit Alkylalkohol, die in den Fetten oder Ölen natürlicherweise vorhandenen Sterylglycoside, ihre Löslichkeit sowohl im Öl bzw. Fett, als auch im, durch die Umesterung gewonnenen, Fettsäurealkylester, größtenteils verlieren, sodass sie als feine Schwebeteilchen ausfallen und beim Einsatz des Fettsäurealkylesters als Biodiesel, zu Verstopfungen der Dieselfilter und Ablagerungen im Motor führen.

In natürlichen Fetten und Ölen liegen die Sterylglycoside größtenteils in der sogenannten acylierten Form vor, d.h. an deren Zuckeranteil ist, über eine Esterbindung, ein Fettsäurerest gekoppelt, der die Lösung in Fett, Öl und Fettsäurealkylester ermöglicht. Bei der Umesterung, in Anwesenheit des Alkylalkohols und Umesterungskatalysators, wird aber der Fettsäurerest vom Sterolglycosidmolekül getrennt, sodass die Löslichkeit verloren geht und die besagten, störenden Ausfällungen entstehen.

R.O. Dunn gibt in seinem Fachartikel: "Effects of minor constituents on cold flow properties and performance of biodiesel" in Progress in Energy and Combustion Science 35 (2009) 481-489, einen ausführlichen Überblick über die Problematik von Ausfällungen im Biodiesel, sowie über die Ursachen und mögliche Abhilfe. Zur Entfernung von Sterolglycosiden wird über ein Verfahren berichtet, das kieselalgenhaltige Erden, Magnesium Silicat und Kieselsäure Hydrogel als Filterhilfsmittel verwendet.

In der Anmeldeschrift EP 2 071 014 A1 wird ein Verfahren vorgeschlagen, bei dem bereits die als Rohstoffe für die Biodieselherstellung verwendeten Triglyceride gereinigt werden, um Verunreinigungen, wie Sterylglycoside, im Biodieselprodukt zu vermeiden. Dazu soll der Roh-Triglycerid-Strom mit wenigstens einem Adsorbens in Kontakt gebracht werden, und außerdem mit wenigstens einem Phenolharz, oder mit einem metallenthaltendem Harz oder mit einem wasserhaltigen Metaloxid und außerdem mit wenigstens einem Kationenaustauschharz.

Um Sterylglycoside aus dem durch Umesterung entstandenen Fettsäurealkylester, dem sogenannten Roh-Biodiesel, zu entfernen, wurden mehrere Verfahren vorgeschlagen. So existiert, wie in WO 2009/132670 berichtet wird, ein Verfahren, bei dem der Roh-Biodiesel abgekühlt wird und dann die ausgefallenen Teilchen abgefiltert werden. Dieses Verfahren sei jedoch in seiner Ausführung äußerst aufwändig. Die WO 2009/132670 selbst schlägt die Verwendung eines Adsorbens, bestehend aus einer Smektit-Kieselgel-Mischphase, vor.
In dem oben erwähnten Fachartikel von Lee, Inmok u.a., wird eine Filtirierung des Biodiesels durch Kieselguhr vorgeschlagen.
WO 2009/106360 schlägt vor, die Sterylglycosidmoleküle mittels eines Enzyms in den Sterol- und den Zuckeranteil zu spalten.
Nachteilig an diesen Verfahren ist, dass jeweils sehr spezielle Mittel, das Adsorbens, Filtermaterial oder das Enzym, für die Durchführung des Verfahrens erworben werden müssen, und dass gegebenenfalls, nach der Durchführung des Verfahrens, diese Hilfsstoffe kostenaufwändig entsorgt werden müssen.

Die deutsche Patentanmeldung 10 2008 050935.3-44 schlägt vor, die aus DE 10 2006 044 467 B4 bekannte saure Wäsche des Roh-Fettsäurealkylesters so zu verändern, dass sie in der Lage ist, neben den sonstigen Verunreinigungen, auch Sterylglycoside aus der Fettsäurealkylesterphase, dem sogenannten Roh-Biodiesel, auszuwaschen. Bei der Wäsche werden die Sterylglycoside aus der Esterphase herausgelöst und bilden eine neue, im wesentlichen aus Sterylglycosid/Fettsäurealkylester/Wasser-Agglomeraten bestehende Phase. Dieser Vorgang ist dadurch erklärlich, dass das Sterylglycosid-Molekül aus einem hydrophilen Teil, dem Zuckerteil, und einem hydrophoben Teil, dem Sterolteil, besteht.
Durch intensive Bearbeitung der Agglomerat-Phase mit mechanischen Rührern, wird deren Dichte soweit erhöht, dass sie mechanisch, z.B. durch Zentrifugieren, aus der Esterphase, als sogenannter Biodieselschlamm, abtrennbar ist.

Nach bisherigem Stand der Technik existiert kein Verfahren zur Aufarbeitung dieses Schlamms, sodass dieser ein beträchtliches Entsorgungsproblem darstellt und die darin enthaltenen Wertstoffe verlorengehen.
Es bestand daher die Aufgabe, ein einfaches und möglichst wenig Reststoffe erzeugendes Verfahren zur Aufarbeitung eines im wesentlichen aus Sterylglycosid/Fettsäurealkylester/Wasser-Agglomeraten bestehenden Biodieselschlamms zur Verfügung zu stellen.

Die Aufgabe wird im Wesentlichen gelöst durch ein Verfahren mit den Merkmalen des Anspruchs 1, bei dem in einem ersten Schritt das Wasser durch Verdampfen aus dem Schlamm entfernt wird, wodurch ein, stark mit Sterolglycosiden angereicherter, Roh-Biodiesel erhalten wird, und anschließender Spaltung der Sterylglycoside, in Anwesenheit eines sauren Katalysators, in deren Sterol- und Zuckeranteil entweder durch Zugabe einer wasserfreien, starken Säure, die nach erfolgter Spaltung der Sterylglycoside durch Zugabe einer äquivalenten Menge einer Base neutralisiert wird, oder durch in Kontakt bringen mit einem sauer wirkenden, festen Ionenaustauscher.

In dem Fachartikel "Lipid Components of Leaves", P.S. Sastry/M. Kates, LIPIDS, Vol. 3, No. 9, S. 1272, September, 1964, wird die Hydrolyse von Lecithin in methanolischer Salzsäure beschrieben. Dieser Grundgedanke, der durch Wasserstoffprotonen in Gang gesetzten Spaltung eines Moleküls, wurde für die Entwicklung des erfindungsgemäßen Verfahrens herangezogen.
Diesem Schritt stand zunächst die Erfahrung entgegen, dass die saure Wäsche des Roh-Fettsäurealkylesters, wie sie seit langem gemäß DE 10 2006 044 467 B4 mit 3%-iger Salzsäure zur Entfernung von Verunreinigungen, wie Seifen und zur Neutralisation des basischen Umesterungskatalysators durchgeführt wird, offensichtlich keine Spaltung der Sterylglycoside bewirkt. Denn auch wenn der größte Teil der Salzsäure durch den basischen Umesterungskatalysator neutralisiert wird, so ist das Waschwasser doch leicht sauer.

Trotzdem wird bei Anwendung dieser sauren Wäsche keine Spaltung der Sterylglycoside, sondern, besonders wenn zur Umesterung Öle mit hohem Sterylglycosid-Gehalt verwendet werden, die Bildung einer Sterylglycosid/Fettsäurealkylester/Wasser-Agglomerat-Phase beobachtet. Das führte zu der Vermutung, dass die stark hydrophile Wirkung des Zuckeranteils des Sterylglycosid-Moleküls zur Bildung einer Schutzschicht aus WasserMolekülen führt, die den Angriff des Katalysators an die Esterbindung zwischen Zucker- und Sterolanteil, und damit die Spaltung des Moleküls, verhindert. Eigene Versuche haben bestätigt, dass die Wasserfreiheit des Roh-Fettsäurealkylesters die entscheidende Voraussetzung für die sauer katalysierte Spaltung der Sterylglycosid-Moleküle ist.

In einer speziellen Ausgestaltung der Erfindung wird das Wasser aus dem Roh-Biodiesel bei einer Temperatur zwischen 120 und 180°C, vorzugsweise zwischen 140 und 160°C abgedampft, wobei das Abdampfen unter atmosphärischem Druck oder bei Unterdruck, vorzugsweise zwischen 500 und 800 mbar ablaufen soll.

In einer weiteren speziellen Ausgestaltung der Erfindung erfolgt die Spaltung der Sterylglycoside, indem der Roh-Biodiesel mit einem sauer wirkenden, festen Ionenaustauscher in Kontakt gebracht wird. Als Ionenaustauscher kann dabei beispielsweise ein organisches Ionenaustauscherharz auf Sulfonsäurebasis, aber auch ein anorganischer Ionentauscher auf Zeolithbasis eingesetzt werden. Dieser Verfahrenschritte wird besonders vorteilhaft bei erhöhter Temperatur, am geeignetsten ist eine Temperatur zwischen 100 und 200°C, durchgeführt. Diese Variante des Verfahrens hat den Vorteil, dass keine Säure in den Roh-Biodiesel eingemischt wird, die anschließend wieder zu neutralisieren bzw. zu entfernen ist.

In einer weiteren speziellen Ausgestaltung der Erfindung erfolgt die Spaltung der Sterylglycoside, indem der Roh-Biodiesel mit methanolischer Schwefelsäure versetzt wird.

Dabei ist es vorteilhaft, wenn die Säuremenge im Methanol zwischen 4 und 50 Gew-% beträgt, die Säure (ohne Methanol-Anteil) in einem Massenverhältnis zu den Sterylglycosiden von 0,2 bis 3 zu 1 zugegeben wird, die Zugabe der Säure und die Spaltung der Sterolglycoside bei einer Temperatur von 30 bis 150°C, bevorzugt bei 40 bis 80°C erfolgt, und wenn dies un ter einem solchen Überdruck erfolgt, dass der methanolische Anteil der Säure im Wesentlichen nicht verdampft.

Das Produkt des erfindungsgemäßen Verfahrens ist ein Roh-Biodiesel mit einem erhöhten Gehalt an gelösten Sterolen und Zuckern. Vor einer Verwendung des Biodiesel als Treibstoff, muss der Zuckergehalt entfernt werden. Das kann durch eine Wäsche des Roh-Biodiesels mit Wasser erfolgen, wobei der Zucker-Anteil in die Waschwasserphase übergeht.

Der erhöhte Sterol-Gehalt dagegen mindert die Gebrauchsfähigkeit des Biodiesels nicht. Optional, wenn es ökonomisch sinnvoll ist, können die Sterole aber aus dem Roh-Biodiesel isoliert werden, um als Wertstoff genutzt zu werden. Im Anschluss an die Entfernung des Zucker-Anteils, können deshalb die Sterole durch Strippen mit Wasserdampf abgetrennt werden.

Weiterbildungen, Vorteile und Anwendungsmöglichkeiten der Erfindung ergeben sich auch aus der nachfolgenden Beschreibung von Anwendungsbeispielen. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

Der Schutzumfang wird durch die Ansprüche definiert. Bei der Durchführung der Beispiele wurden folgende Mess- und Analysenmethoden angewandt:
- Bestimmung von Phosphatiden, DIN EN 14107
- Bestimmung von Schwefel, DIN EN ISO 20884
- Bestimmung von Fettsäuremethylester, DIN EN 14103
- Bestimmung von Sterylglycosiden, Sterole, DIN EN 14105
- Bestimmung von Methanol, DIN EN 14110
- Bestimmung von Zucker, mittels High Pressure Liquid Chromatography mit Brechungsindexdetektor
- Bestimmung von Wasser, DIN EN ISO 12937
- Bestimmung von Freien Fettsäuren, DIN EN 14104
- Bestimmung von Schwefelsäure, lonenchromatographische Bestimmung von Sulfationen oder durch Fällung als Bariumsulfat

### Beispiel 1:

Aus Palmöl wurde in einer gemäß dem in DE 10 2006 044 467 B4 patentierten Verfahren arbeitenden Pilotanlage durch basisch katalysierte Umesterung mit Methanol Roh-Biodiesel erzeugt. Die Produktionskapazität der Pilotanlage betrug 100 kg Roh-Biodiesel pro 24 Stunden.

Das eingesetzte Palmöl hatte folgende Zusammensetzung:
Freie Fettsäure: 0,02 Gew-%
Feuchte: 0,02 Gew-%
Phosphor: 6 ppm
Schwefel: < 1 ppm
Sterylglycoside: 1015 ppm

Der erhaltene Roh-Fettsäuremethylester hatte, nach der verfahrensgemäßen Neutralisation mit 3 %-iger Salzsäure, folgende Zusammensetzung:
Freie Fettsäure: 0,03 Gew-%
Feuchte: 0,47 Gew-%
Phosphor: 3 ppm
Schwefel: < 1 ppm
Sterylglycoside: 970 ppm

Der Roh-Fettsäuremethylester wurde in einem kontinuierlichen Prozess in einer Waschkolonne einer Wäsche mit Wasser unterzogen, wobei sich in der Kolonne, an der Grenze zwischen Wasser- und Esterphase, eine im wesentlichen aus Sterylglycosid/Fettsäurealkylester/Wasser-Agglomeraten bestehenden Phase bildete, die durch Rühren ständig aufgelockert wurde, sodass die Agglomerate in die Esterphase übertraten und darin suspendiert vorlagen. Die Esterphase wurde aus der Waschkolonne kontinuierlich in einen Rührbehälter abgezogen und darin mit einem Intensivmischer unter Zugabe von Wasser behandelt. Dabei bildete sich ein Gemisch aus Roh-Biodiesel und Biodieselschlamm, der durch die Intensivmischung aus den Agglomeraten gebildet worden war. Das Gemisch wurde kontinuierlich aus dem Intensivmisch-Behälter in eine Zentrifuge überführt, mittels der der Schlamm aus dem Roh-Biodiesel abgetrennt wurde.
Dieser Waschvorgang entsprach dem in der noch nicht veröffentlichten deutschen Patentanmeldung 10 2008 050935.3-44 beschriebenen Verfahren.

Aus der mit Wasser durchgeführten Wäsche von 100 kg Roh-Biodiesel wurde eine Biodieselschlamm-Menge von 8100 g erhalten. Dieser Schlamm hatte folgende Zusammensetzung:

| | |
|---|---|
| Sterylglycoside: | 1,0 Gew-% |
| Fettsäuremethylester: | 49,0 Gew-% |
| Wasser: | 50,0 Gew-% |

Nach einer Standzeit von 24 h hatten sich aus der Schlammschicht Fettsäuremethylester als obere Schicht und Wasser als untere Schicht abgesetzt. Nach dem getrennten Absaugen der beiden Schichten verblieb eine Schlamm-Menge von 7240 g mit folgender Zusammensetzung:

| | |
|---|---|
| Sterylglycoside: | 1,1 Gew-% |
| Fettsäuremethylester: | 48,3 Gew-% |
| Wasser: | 50,6 Gew-% |

Dieser Schlamm wurde unter atmosphärischem Druck und unter Rühren auf 150 °C erhitzt und weitere 3 h bei 150 °C gerührt bis d as Wasser aus der Lösung fast vollständig abgedampft war und eine Lösungsmenge von 3.584 g mit folgender Zusammensetzung erhalten wurde:

| | |
|---|---|
| Sterylglycoside: | 2,2 Gew-% |
| Fettsäuremethylester: | 97,5 Gew-% |
| Wasser: | 0,3 Gew-% |

Die Lösung wurde unter atmosphärischem Druck und unter Rühren auf 50 °C abgekühlt und es wurde langsam eine Menge von 200g einer 30 Gew-% methanolischen Schwefelsäure zugesetzt. Die Lösung wurde bei 50 °C 2 h gerührt.
Dabei wurde eine Lösungsmenge von 3776 g erhalten mit folgender Zusammensetzung:

| | |
|---|---|
| Sterole: | 1,5 Gew-% |
| Fettsäuremethylester: | 92,4 Gew-% |
| Zucker: | 0,7 Gew-% |
| Wasser: | 0,1 Gew-% |
| Schwefelsäure: | 1,6 Gew-% |
| Methanol: | 3,7 Gew-% |
| Sterylglycoside: | konnten nicht nachgewiesen werden |

Anschließend wurde die Lösung viermal mit jeweils 150 g 40 %iger Natronlauge und mit 3 Liter 50 °C warmen Wasser in einem Rührbe hälter mit einem Intensivmischer behandelt, wobei der Zucker- und der Methanolgehalt in die Wasserphase überging. Anschließend wurde das Wasser durch Dekantieren abgetrennt. Nach dem vierten Durchgang betrug die Menge der Fettsäuremethylesterphase 3564 g und hatte folgende Zusammensetzung:

| | |
|---|---|
| Sterole: | 1,6 Gew-% |
| Fettsäuremethylester: | 97,9 Gew-% |
| Wasser: | 0,5 Gew-% |
| Säurekonzentration: | < 0,1 Gew-% |

### Beispiel 2:

Aus der mit Wasser durchgeführten Wäsche von 100 kg Roh-Biodiesel der gleichen Spezifikation wie in Beispiel 1, wurde nach dem in Beispiel 1 beschriebenem Waschverfahren eine Biodieselschlamm-Menge von 8000 g erhalten. Dieser Schlamm hatte folgende Zusammensetzung:

| | |
|---|---|
| Sterylglycoside: | 1,1 Gew-% |
| Fettsäuremethylester: | 47,7 Gew-% |
| Wasser: | 51,2 Gew-% |

Nach einer Standzeit von 24 h hatten sich aus der Schlammschicht Fettsäuremethylester als obere Schicht und Wasser als untere Schicht abgesetzt. Nach dem getrennten Absaugen der beiden Schichten verblieb eine Schlamm-Menge von 7097 g mit folgender Zusammensetzung:

| | |
|---|---|
| Sterylglycoside: | 1,2 Gew-% |
| Fettsäuremethylester: | 48,4 Gew-% |
| Wasser: | 50,4 Gew-% |

Dieser Schlamm wurde unter atmospärischem Druck und unter Rühren auf 150 °C erhitzt und weitere 3 h bei 150 °C gerührt bis d as Wasser aus der Lösung fast vollständig abgedampft war und eine Lösungsmenge von 3530 g mit folgender Zusammensetzung erhalten wurde:

| | |
|---|---|
| Sterylglycoside: | 2,4 Gew-% |
| Fettsäuremethylester: | 97,3 Gew-% |
| Wasser: | 0,3 Gew-% |

Diese Roh-Fettsäuremethylesterphase wurde auf 140 °C abgekühlt und kontinuierlich durch eine Behandlungskolonne mit festem Ionenaustauscher geleitet.

Für den Versuchsaufbau wurde ein ca. 80 cm langer Doppelmantelstahlzylinder mit 5 cm Innendurchmesser, der mit Glaskugeln mit 3 mm Durchmesser, Glaswolle und 200 g des stark sauren Ionenaustauschers R CT269DR (Purolite) gefüllt war, verwendet. Die lonenaustauscher- Bettlänge betrug 300 mm; die Granulatdurchmesser des Ionenaustauschers 0,7-0,8 mm.

Der Ester wurde aus einer beheizten Vorlage mittels Pumpe von unten in die Kolonne gefördert und über den oberen Kolonnenablauf in ein Auffangbehälter abgeleitet. Die Heizung des Kolonnenmantels erfolgte über einen thermostatierten Ölbadkreislauf.

Der Durchsatz betrug 200 ml / h. Nach ca. 12 h wurde der Prozess abgebrochen.

Dabei wurde eine Lösungsmenge von 1914 g erhalten mit folgender Zusammensetzung:

| | |
|---|---|
| Sterole: | 1,7 Gew-% |
| Fettsäuremethylester: | 96,9 Gew-% |
| Zucker: | 0,7 Gew-% |
| Wasser: | 0,1 Gew-% |
| Freie Fettsäure: | 0,7 Gew-% |
| Sterylglycoside: | konnten nicht nachgewiesen werden |

## Patentansprüche

1. Verfahren zur Aufarbeitung einer im Wesentlichen aus Sterylglycosid/Fettsäurealkylester/Wasser-Agglomeraten bestehenden Phase, die bei der Wäsche mit Wasser von durch Umesterung von pflanzlichen Ölen oder tierischen Fetten erzeugtem Fettsäurealkylester entstanden ist, **gekennzeichnet, durch** die Abfolge folgender Verfahrensschritte:
a) Verdampfung des Wasseranteils.
b) Spalten der Sterylglycoside in Anwesenheit eines sauren Katalysators in deren Sterol- und Zuckeranteil entweder durch Zugabe einer wasserfreien, starken Säure oder durch in Kontakt bringen mit einem sauer wirkenden, festen Ionenaustauscher.

2. Verfahren nach Anspruch 1, **dadurch gekennzeichnet, dass** im Anschluss an Verfahrensschritt 1. b), bei Verwendung von flüssiger oder gelöster Säuren, eine Neutralisation der im vorherigen Schritt zugegebenen Säure durch Zugabe einer äquivalenten Menge einer Base erfolgt.

3. Verfahren nach Anspruch 1, **dadurch gekennzeichnet, dass** das Verdampfen des Wassers bei 120 bis 180°C, bevorzugt bei 140 bi s 160°C und bei atmosphärischem Druck, oder bei Unterdruck, vorzugsweise von 500 bis 800 mbar erfolgt.

4. Verfahren nach Anspruch 1, **dadurch gekennzeichnet, dass** der Kontakt mit einem sauer wirkenden, festen Ionenaustauscher bei einer Temperatur von 100 bis 200°C erfolgt.

5. Verfahren nach Anspruch 1 und 2, **dadurch gekennzeichnet, dass** dem Gemisch, zur Spaltung der Sterolglycoside, als Katalysator eine wasserfreie, flüssige Säure, bevorzugt methanolische Säure, besonders bevorzugt methanolische Schwefelsäure, zugegeben wird.

6. Verfahren nach Anspruch 5, **dadurch gekennzeichnet, dass** die Säuremenge im Methanol bevorzugt 4 bis 50 Gew-% beträgt, die Säure (ohne Methanol-Anteil) in einem Massenverhältnis zu den Sterylglycosiden von 0,2 bis 3 zu 1 zugegeben wird, dass die Zugabe der Säure und die Spaltung der Sterolglycoside bei einer Temperatur von 30 bis 150°C, bevorzugt bei 40 bis 80°C erfolgt, und dass dies unter einem solchen Überdruck erfolgt, dass der methanolische Anteil der Säure im wesentlichen nicht verdampft.

7. Verfahren nach Anspruch 1 und 4, **dadurch gekennzeichnet, dass** als Ionenaustauscher ein organisches Ionenaustauscherharz auf Sulfonsäurebasis oder ein anorganischer Ionenaustauscher auf Zeolithbasis eingesetzt wird.

## Claims

1. A method for reprocessing a phase substantially consisting of steryl glycoside/fatty acid alkyl ester/water agglomerates, which was formed when fatty acid alkyl ester generated by transesterification of vegetable oils or animal fats was washed with water, **characterized by** the sequence of the following method steps:
a) evaporation of the water content;
b) breakdown of the steryl glycosides into their sterol and sugar fractions in the presence of an acid catalyst either by addition of an anhydrous strong acid or by contacting with an acidically acting solid ion exchanger.

2. The method according to claim 1, **characterized in that** subsequent to method step 1. b), when using liquid or dissolved acids, a neutralization of the acid added in the preceding step is effected by adding an equivalent amount of a base.

3. The method according to claim 1, **characterized in that** evaporating the water is effected at 120 to 180 °C, preferably at 140 to 160 °C and at atmospheric pressure, or at negative pressure, preferably from 500 to 800 mbar.

4. The method according to claim 1, **characterized in that** the contact is effected with an acidically acting solid ion exchanger at a temperature of 100 to 200 °C.

5. The method according to claims 1 and 2, **characterized in that** an anhydrous liquid acid, preferably methanolic acid, particularly preferably methanolic sulfuric acid, is added to the mixture as catalyst for the breakdown of the sterol glycosides.

6. The method according to claim 5, **characterized in that** the acid quantity in the methanol preferably is 4 and 50 wt-%, the acid (without methanol content) is added in a mass ratio to the steryl glycosides of 0.2 to 3 to 1, that the addition of the acid and the breakdown of the sterol glycosides is effected at a temperature of 30 to 150 °C, preferably at 40 to 80 °C, and that this is effected under such an excess pressure that the methanolic fraction of the acid substantially is not evaporated.

7. The method according to claims 1 and 4, **characterized in that** as ion exchanger a sulfonic-acid-based organic ion exchanger resin or a zeolite-based inorganic ion exchanger is used.

## Revendications

1. Procédé de retraitement d'une phase constituée essentiellement
d'agglomérats de stérylglycoside/ester alcoylique d'acide gras/eau, qui se crée lors du lavage à l'eau d'ester alcoylique d'acide gras produit par transestérification d'huiles végétales ou de matières grasses animales,
**caractérisé par** la succession des stades de procédé suivants :
a) évaporation de la proportion d'eau.
b) séparation des stérylglycosides, en présence d'un catalyseur acide, en sa partie stérol et en sa partie sucre, par addition d'un acide fort anhydre ou par mise en contact avec un échangeur d'ions solide à effet acide.

2. Procédé suivant la revendication 1, **caractérisé en ce qu'**à la suite du stade 1. b) du procédé, on effectue, lorsque l'on utilise des acides liquides ou dissous, une neutralisation de l'acide ajouté au stade précédent par addition d'une quantité équivalente d'une base.

3. Procédé suivant la revendication 1, **caractérisé en ce que** l'on effectue l'évaporation de l'eau entre 120 à 180°C, de préférence entre 140 à 160°C et à la pression atmosphérique ou en dépression, de préférence allant de 500 à 800 mbar.

4. Procédé suivant la revendication 1, **caractérisé en ce que** l'on effectue le contact avec un échangeur d'ions solide à effet acide à une température de 100 à 200°C.

5. Procédé suivant la revendication 1 ou 2, **caractérisé en ce que** l'on ajoute au mélange, pour la séparation des stérylglycosides comme catalyseur, un acide liquide anhydre, de préférence un acide méthanolique, d'une manière particulièrement préférée de l'acide sulfurique méthanolique.

6. Procédé suivant la revendication 5, **caractérisé en ce que** la quantité d'acide dans le méthanol va de préférence de 4 à 50% en poids, l'acide (sans sa partie méthanolique) étant ajouté en un rapport massique aux stérylglycosides de 0,2 à 3 à 1 et **en ce que** l'addition de l'acide et la séparation des stérylglycosides s'effectue à une température de 30 à 150°C, de préférence de 40 à 80°C, et **en ce que** cela s'effectue à une surpression telle que la proportion méthanolique de l'acide ne s'évapore sensiblement pas.

7. Procédé suivant la revendication 1 et 4, **caractérisé en ce que** l'on utilise comme échangeur d'ions une résine d'échangeur d'ion organique à base d'acide sulfonique ou une résine d'ions minérale à base de zéolithe.
